Europäisches Patentamt

European Patent Office

Office européen des brevets

(19)

(11) Publication number: **0 177 240**
**A2**

(12) **EUROPEAN PATENT APPLICATION**

(21) Application number: **85306760.1**

(22) Date of filing: **24.09.85**

(51) Int. Cl.⁴: **F 16 H 37/08**

(30) Priority: **28.09.84 GB 8424526**

(43) Date of publication of application:
**09.04.86 Bulletin 86/15**

(84) Designated Contracting States:
**BE DE FR GB IT NL SE**

(71) Applicant: **LEYLAND VEHICLES LIMITED**
**Lancaster House**
**Leyland Preston PR5 1SN Lancashire(GB)**

(72) Inventor: **Greenwood, Christopher John**
**14 Edinburgh Close**
**Leyland Lancs(GB)**

(74) Representative: **Rock, Olaf Colin et al,**
**LRL Patent Trademark and Licensing Department 106**
**Oxford Road**
**Uxbridge Middlesex UB8 1EH(GB)**

(54) **Continuously variable transmission.**

(57) A driveline for an engined vehicle comprises a con-
tinuously-variable ratio transmission and means for providing an output, derived from the continuously-variable ratio
transmission, in either a low or high regime, the change
between low and high regime being made synchronously by
the continuously- variable ratio transmission. At the said
change the continuously-variable ratio transmission changes
between a state in which its transmission ratio is increasing
in the direction of change, and one in which its transmission
ratio is decreasing.

Fig.2.

EP 0 177 240 A2

Croydon Printing Company Ltd.

CONTINUOUSLY VARIABLE TRANSMISSION    X1563

The present invention relates to continuously variable transmissions (often abbreviated to CVTs).

Continuously variable transmissions are transmissions which provide a continuous spread of transmission ratios between a given maximum and minimum. As such they are well suited for use as drivelines in vehicles which have to deliver a wide variety of torques, and are particularly suitable for use in vehicles which also benefit from running their engines at a speed substantially independent of vehicle speed

According to the present invention there is provided a driveline for an engined vehicle, comprising a continuously-variable ratio transmission and means for providing an output, derived from the continuously-variable ratio transmission, in either a low or high regime, the change between low and high regime being made synchronously by the continuously-variable ratio transmission, wherein at the said change the continuously-variable ratio transmission changes between a state in which its transmission ratio is increasing in the direction of change, and one in which its transmission ratio is decreasing.

In an embodiment of the invention, the magnitude of the power transmitted through the continuously-variable ratio transmission remains substantially constant across thechange. It will be appreciated that although the magnitude of the power remains constant it will change in sign.

By making the continuously-variable ratio transmission have a low transmission ratio when the vehicle is travelling at low speeds in low regime, the power transmitted through the continuously- variable ratio transmission can be kept low, thereby allowing the driveline to be used in vehicles such as agricultural tractors which spend much of their time at low speeds, while maintaining transmission life within acceptable limits.

Reference will now be made, by way of example, to the accompanying drawings, in which:
Figure 1 shows schematically a transmission to which the invention may be applied, and
Figures 2 and 3 are graphs.

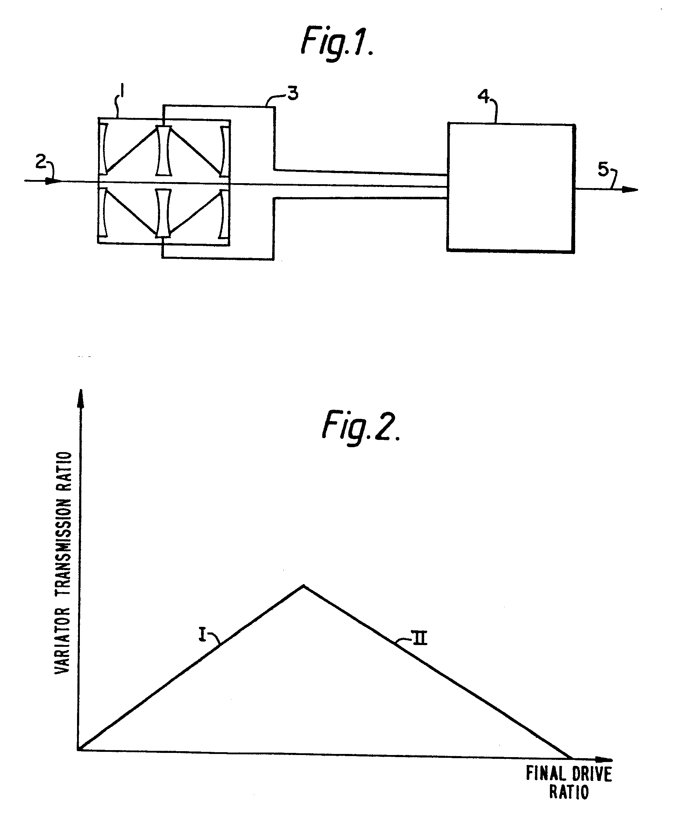

The transmission shown schematically in Figure 1 comprises a variator 1 of the toroidal race-rolling traction type, having an input driven by the output shaft 2 of an engine(not shown), and an output 3. The output 3 drives means 4, which may be a pair of epicyclics,

- 2 -

having an output 5 providing final drive, which means also receive an input from the engine by way of the output shaft 2. The means can be engaged in either low regime or high regime, to increase the range of ratios that the transmission can provide. In use the means are first engaged in low regime. At a specified ratio of the rates of rotation of the engine output shaft 2 and the output 3, the final drive does not rotate, and the vehicle is stationary. To move off, the transmission ratio of the variator is altered, which causes the final drive to rotate, as the transmission ratio of the system is changed from being effectively zero to a small finite value. Changing the variator ratio further in the same direction causes the transmission ratio of the system to continue to increase, causing the vehicle speed to rise.

At a preselected transmission ratio, the system changes from low to high regime. To achieve further increases in transmission ratio, the variator ratio is then changed in the opposite direction, to bring it back towards its original state. The change between low and high regime is made synchronously by the variator. That is to say, the variator ratio remains substantially constant across the change.

In known transmissions the variator ratio is initially high when the vehicle is stationary in low regime, and is reduced to increase the final drive ratio until high regime is engaged, after which to increase the final drive ratio further the variator ratio is increased.

In a transmission embodying the invention, the direction of variator ratio change is reversed as compared to the prior art. When the vehicle is stationary, with the system in low regime, the variator ratio is low. To cause the vehicle to move off, the variator ratio is increased, which increases the final drive ratio, until the vehicle speed is such that high regime needs to be engaged. In high regime, the variator ratio is decreased to increase the final drive ratio further.

Figure 2 is a graph showing the relationship between the final drive ratio and the variator transmission ratio in a transmission embodying the invention, as the vehicle moves from stationary up to high regime. The first portion, I, shows the increasing variator ratio when the transmission is in low regime. In this example the lowest variator ratio corresponds to zero final drive ratio (i.e. vehicle stationary), but it should be noted that if desired the means may be chosen so as to include a reverse capability within low regime, avoiding the need for separate reverse gearing. The second portion, II, shows the decreasing variator ratio when the transmission is in high regime. It will be seen that a smooth, synchronous crossover is achieved between low and high regimes.

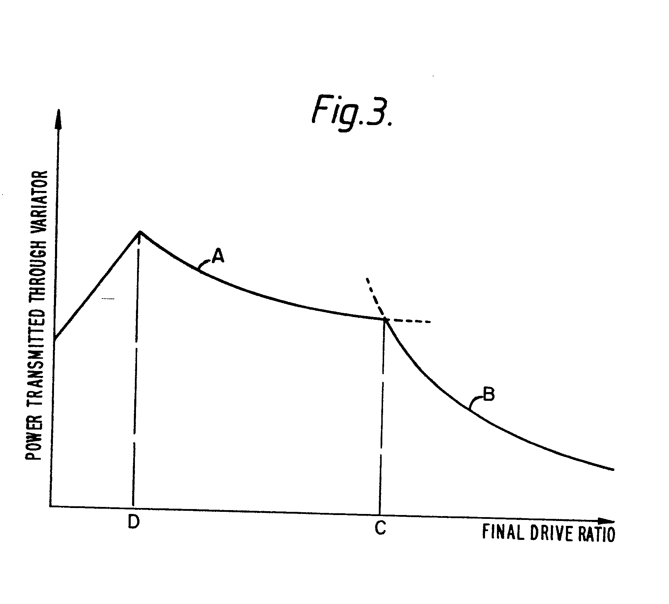

As well as being made synchronously, the change may also be made with the magnitude of the variator power remaining constant. Figure 3 is a graph of power transmitted through the variator against final drive transmission ratio in a transmission embodying the present invention. Curve A represents the power transmitted through the variator in low regime, while curve B represents the power transmitted through the variator in high regime. The point at which the regime change occurs is indicated at C.

The shape of curve A arises because at low ratios the torque applied to the variator is limited by wheelspin or is controlled to be limited to a predetermined maximmum. Assuming the coefficient of friction between the wheel and ground to be constant at, say, 1, then at low ratios the power will rise linearly as torque remains constant but variator ratio, and hence output revolution rate rises. At point D, however, the power output of the system is no longer sufficient to induce wheelspin, and the characteristics of the system become dominant.

After changing to high regime, the powertransmitted is determined by the characteristics of the system in high regime.

If the change were made either to the left or right of point C, when one of the curves was in one of the portions shown broken, then the maximum power passing through the variator would clearly be increased. In an embodiment of the invention therefor the change is made at the point where the two curves intersect, so loading the variator to the least possible extent.

CLAIMS

1. A driveline for an engined vehicle, comprising a continuously-variable ratio transmission and means for providing an output, derived from the continuously-variable ratio transmission, in either a low or high regime, the change between low and high regime being made synchronously by the continuously- variable ratio transmission, wherein at the said change the continuously-variable ratio transmission changes between a state in which its transmission ratio is increasing in the direction of change, and one in which its transmission ratio is decreasing.

2. A driveline as claimed in claim 1, wherein the magnitude of the power transmitted through the continuously-variable ratio transmission remains substantially constant across the change.

- 7 -

1/2.

0177240

Fig.1.

Fig.2.

VARIATOR TRANSMISSION RATIO

I

II

FINAL DRIVE RATIO

0177240

# Fig.3.